# EUROPEAN PATENT SPECIFICATION

(11) **EP 0 330 349 B1**
(45) Date of publication and mention of the grant of the patent: **27.07.1994**
(21) Application number: 89301314.4
(22) Date of filing: 13.02.1989
(51) Int. Cl.: B21J 15/06

(54) **Breakstem fastener installation tool**
Werkzeug zum Setzen von Blindnieten
Outil à poser des rivets borgnes

(30) Priority: 26.02.1988 GB 8804613
(43) Date of publication of application: 30.08.1989
(73) Proprietor: AVDEL SYSTEMS LIMITED, Welwyn Garden City Hertfordshire AL7 1EZ (GB)
(72) Inventor: Summerlin, Frederick Arthur, Holbeton Plymouth Devon (GB); Hendry, James Calder, Great Barford Bedfordshire (GB)
(74) Representative: Treacher, Alan Leslie

(56) References cited:
- EP-A- 0 286 296
- US-A- 2 525 626
- US-A- 3 088 618
- US-A- 3 374 656

## Description

The invention relates to a breakstem fastener installation tool, that is to say a tool for installing fasteners each having a stem, part of which stem breaks off on installation of the fastener. The fastener is installed by pulling on the fastener stem with respect to the fastener body, thereby deforming the body of the fastener. Increased pulling on the fastener stem causes the stem to break, leaving part of the stem plugging the body. Commonly the tool is pneumatically powered, with a pneumatically actuated piston and cylinder device for applying force to pulling means (e.g. stem-gripping jaws) for pulling the stem.

The fastener stem must be designed to break at a tension greater than that which is required to fully deform the fastener body; usually this is achieved by forming the stem with a weakened section or breakneck which will fracture at a predetermined tension. Typical values of fracture tension for small breakstem rivets are within the range 500lbs force to 1200 lbs force (2224 to 5338 Newtons).

When a fastener is being installed by a tool, the breaking of the fastener stem suddenly releases the resistance to the tension force generated within the tool by the pneumatic piston and cylinder device. This generates a substantial mechanical shock, and air-generated noise, in the tool, which is usually hand held. A breakstem fastener installation tool provided with a simple damping valve is known from US-A-3 088 618.

The present invention seeks to provide an improved valve.

The present invention provides, in one of its aspects, a breakstem fastener installation tool, which tool comprises:-
pulling means for pulling the stem of a fastener;
a pneumatically actuated piston and cylinder device for applying force to the pulling means so as to pull the fastener stem;
and a damping valve for damping the flow of air from the piston and cylinder device when the force is suddenly released on breaking of a fastener stem, thereby to reduce mechanical shock to the tool when a fastener stem breaks;
the damping valve including a valve seat, and a valve member which is resilient and is biassed towards its open position by its own resilience; at least one edge portion of the resilient valve member being arranged to approach and then abut the valve seat when the valve member moves to its closed position; the valve also including securing means for securing the resilient valve member at a securing position thereon which is spaced away along the valve member from the said edge portion of the valve member; characterised in that the securing position is also displaced away from the valve seat along a direction perpendicular to the valve seat and to the plane of the valve member.

The term 'damping' is used to include both restricting the flow of air and shutting off completely the flow of air.

Further features of the invention will become apparent from the accompanying claims and description.

A specific embodiment of the invention will now be described by way of example and with reference to the accompanying drawings, in which:-
Figure 1 is an axial cross-section through a hand-held pneumatically actuated tool for installing blind breakstem rivets;
Figure 2 is an enlargement of part of Figure 1, showing the damping valve;
Figure 3 is an underplan view in the direction of arrow 3 in Figure 2;
Figures 4A, 4 B and 4C show schematically progressive movement of the valve member of Figure 2 from its open position to its closed position; and
Figures 5A, 5B and 5C are similar but show schematically the action of a modified valve from which part has been omitted.

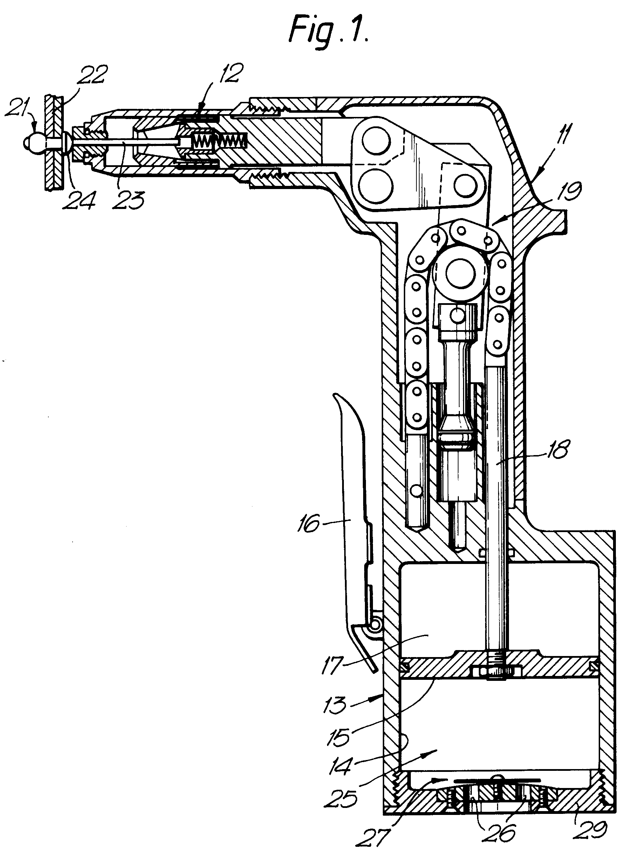

The hand-held pneumatically-actuated tool shown in Figure 1 comprises a body casting 11 incorporating pulling means in the form of a jaw mechanism 12, and a pneumatically actuated piston and cylinder device 13 for applying force to the jaw mechanism 12. The piston and cylinder device 13 comprises a cylinder 14 formed in the lower end of the casting 11, in which reciprocates a piston 15. When a trigger 16 is depressed, compressed air is fed (by means of a valve and conduits not shown) to the space 17 within the cylinder 14 above the piston 15. This applies downwards force to the piston 15, which force is transmitted to the jaw mechanism 12 by means of a piston rod 18 and a mechanical linkage 19. In use of the tool, a suitable breakstem rivet 21 to be installed in a workpiece 22 has its protruding stem 23 inserted within the jaw mechanism 12. When the tool is actuated, the jaw mechanism grips the stem 23 and applies a progessively increasing tension to it, with respect to the body 24 of the rivet. Figure 1 illustrates the stage where the rivet body has been partially deformed into a blind head. Increase of the tension applied by the tool causes completion of deformation of the rivet body and subsequent fracture of the rivet stem at a breakneck (not visible in Figure 1).

Breakstem rivets, and pneumatically actuated tools for placing them, are well known in the mechanical assembly industries.

When the rivet stem fractures, resistance to the force acting downwardly on the piston 15 is suddenly removed. The space 17 above the piston is filled with air at a pressure approaching the supply line pressure, typically about 80 pounds per square inch (552 kilo Newtons per square meter or 5.3 bar). This pressure then accelerates the piston 15 downwardly with corresponding sudden movement of the mechanical linkage 19 and jaw mechanism 12. This results in mechanical shock to the tool when the piston hits the bottom of the cylinder, and therefore to the operator who is holding the tool in his hand, in the case of a prior art tool not provided with the valve of the present invention. A sharp noise also generated by the air in the space 25 below the piston being suddenly driven out through vent holes 26 in the base of the cylinder.

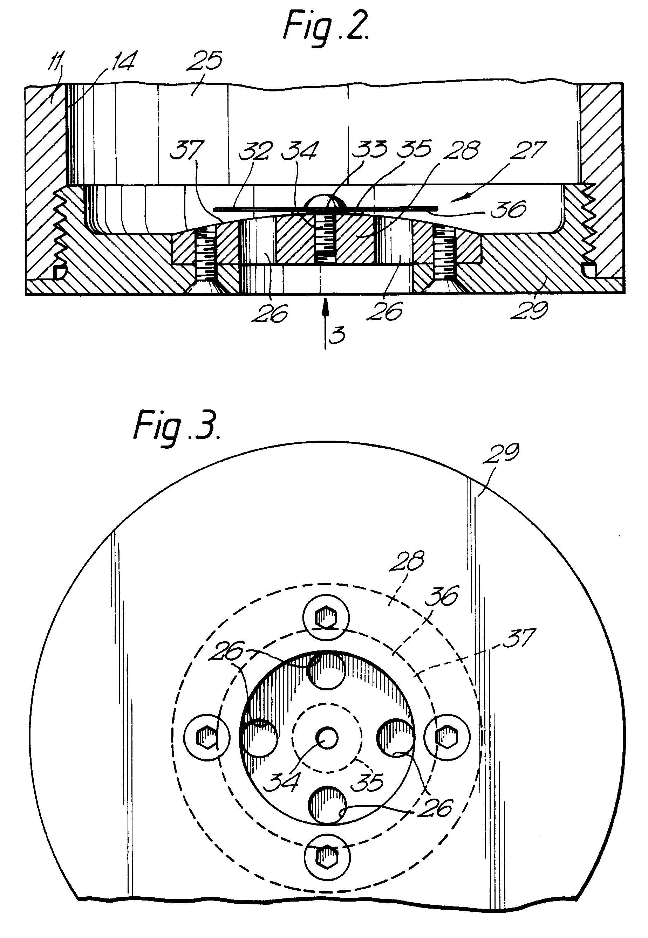

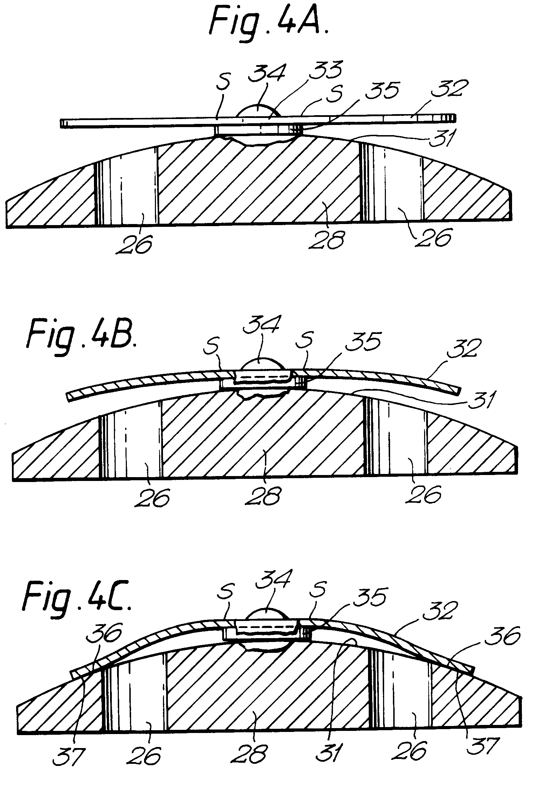

In order to reduce these unwelcome effects, the present invention provides a damping valve 27, to damp the flow of air from the space 25 of the piston and cylinder device 13 out through the vent holes 26. This provides resistance to the sudden movement of the piston 15 and the other parts of the tool as mentioned above. The construction of the valve is illustrated in Figures 2 and 3, and its manner of operation in Figures 4A, 4B and 4C.

The four vent holes 26 are provided in a circular insert 28 secured in the centre of the base cap 29 of the cylinder 14. The upper surface 31 of the insert is convexly domed, being part-spherical in form. A resilient valve member, in the form of a flat circular disc 32 of thin springy steel, is mounted by means of a screw 34 on the insert at a mounting position 33 which is at the centre of the disc 32 and also at the centre, and highest point, of the domed surface 31 of the insert 28, The underside of the disc 32 is spaced away from the highest point of the surface 31 by means of a spacer washer 35.

Figures 2 and 4A show the valve 27 in its open postion, with the disc 32 in its undeformed or flat configuration. When sufficient air pressure is applied above the valve, the velocity of air flow across the underside of the peripheral part of the disc towards the vent holes 26 reduces the air pressure below the disc. The disc 32 is deformed by the air pressure difference across it, so that it bends against the biassing of its own resilience. Figure 4B shows the disc 32 deformed part of the way between its open position and its closed position. As the air pressure difference across the disc 32 increases, the force on its upper face increases and it bends further, until its peripheral edge portion 36 abuts the annular portion 37 of the top surface 31 of the insert. This annular portion provides a seat for the valve member 32, which seat is radially outside the four vent holes 26, so that the valve is then in its closed postion, as shown in Figure 4C. It should be noted that the annular portion 37 of the surface 31, which provides the valve seat, is substantially parallel to the abutting edge portion 36 of the disc (as seen in diametral cross-section in Figure 4C), thus providing enhanced sealing of the valve over mere line contact between the valve disc and valve seat.

It will be seen from Figures 4A, 4B and 4C that, when the valve member 32 moves from its open postion to its closed position by the action of the air on it, no other part of the disc 32 meets any other part of the upper surface 31 of the insert or any other obstruction to its free movement, before the peripheral edge portion 36 of the disc 32 abuts the annular valve seat 37. The result is that the unsupported area of the disc, on which the air pressure acts to further deform the disc, remains undiminished, so that the effective force is not reduced. Furthermore the radially outermost supported position S of the disc 32, defined by the periphery of the spacer washer 35, does not change, so that the radius at which the effective force acts to produce a bending moment on the disc is not reduced. Thus the bending moment of the air pressure on the disc is not reduced as the disc deformation progressively increases. This unobstructed movement of the disc is due to the fact the mounting position 33 of the centre of the disc 32 is displaced in the axial direction of the disc (i.e. generally transverse to the plane of the disc), above the adjacent surface 31 of the valve insert 28.

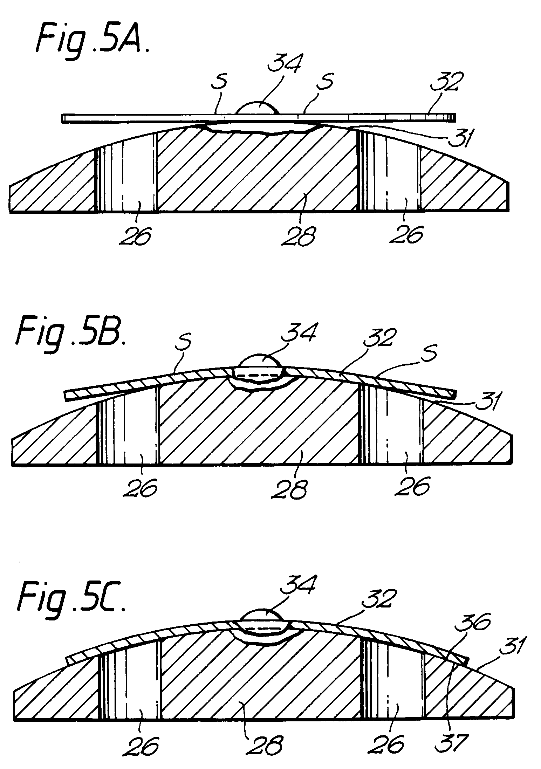

If this is were not present, i.e. if the spacer washer 35 is omitted, the valve has different characteristics as is illustrated in Figures 5A, 5B and 5C. It will be seen that, as the disc 32 progressively deforms towards the surface 31 of the insert 28, the underside of the disc comes into contact with the domed surface 31 at a position S which moves progressively radially outwardly. This has two disadvantgeous effects. Firstly, the unsupported area of the disc, on which the air pressure above the disc can act to further deform the disc, progressively reduces so that the effective force on the disc progressively reduces. Secondly, the radially outermost supported position S on the disc progressively moves outwards, and the radius at which the effective force on the unsupported part of the disc acts progressively reduces. Thus the bending moment of the air pressure on the disc progressively reduces. On the other hand, the disc has to be deflected to a lesser extent, and should therefore close at a lower applied pressure difference across it. Also the narrower gap between the disc and the surface 31 increases the velocity of air flow under the disc, which reduces the pressure under the disc and increases the resultant pressure donwards on the disc.

Thus in case of the tool of this example fitted with either form of valve, when the rivet stem breaks and the piston 15 is suddenly free to move downwards under the urging of the air pressure above it, the air pressure thereby generated in the space 25 below the piston tends to move the valve 27 at least part way towards its closed position and, may be closes the valve completely. This has the effect of reducing or shutting off the flow of air through the vent holes 26, thus providing a damping or braking action on the movement of the piston 15 and connected parts of the tool. When the valve 27 closes completely, the piston 15 is progressively decellerated. In either case, the mechanical shock and air-generated noise are reduced.

When the stem has broken and the fastener has been placed, the operator releases the trigger, the air pressure is removed from the space 17 which is then vented, and the piston 15 moves upwardly under the urging of a return mechanism. The valve 27 reopens when the pressure in space 25 drops, and the tool is ready for its next cycle of operation.

## Claims

1. A breakstem fastener installation tool, which tool comprises:-
pulling means for pulling the stem (23) of a fastener (21);
a pneumatically actuated piston and cylinder device (13) for applying force to the pulling means so as to pull the fastener stem (23);
and a damping valve (27) for damping the flow of air from the piston and cylinder device (13) when the force is suddenly released on breaking of a fastener stem (23), thereby to reduce mechanical shock to the tool when a fastener stem (23) breaks; which damping valve (27) is biassed towards the open position but is moved, against the biassing, towards the closed position by the action on the valve (27) of the air when a fastener stem (23) breaks as aforesaid;
the damping valve (27) including a valve seat (37), and a valve member (32) which is resilient and is biassed towards its open position by its own resilience; at least one edge portion (36) of the resilient valve member (32) being arranged to approach and then abut the valve seat (37) when the valve member (32) moves to its closed position; the valve (27) also including securing means (34) for securing the resilient valve member (32) at a securing position (33) thereon which is spaced away along the valve member (32) from the said edge portion (36) of the valve member (32); characterised in that the securing position (33) is also displaced away from the valve seat (37) along a direction perpendicular to the valve seat (37) and to the plane of the valve member (32).

2. A tool as claimed in claim 1, in which the valve member (32) is in the form of a circular disc having a peripheral edge portion (36) as aforesaid and having the securing position (33) at the centre of the disc.

3. A tool as claimed in claim 1 or claim 2, in which the valve member (32) is in the form of a substantially flat resilient disc, which is biassed as aforesaid towards a substantially flat configuration in the open position and is moved to a curved configuration in the closed position.

4. A tool as claimed in any of claims 1 to 3, in which the valve seat (37) is substantially parallel to the abutting edge portion (36) of the resilient valve member (32) as the latter approached and abuts it.

5. A tool as claimed in claim 1, in which the valve member (32) at its securing position (33) is displaced away from the adjacent part of the surface (31) contiguous with the valve seat (37) along a direction perpendicular to the valve seat (37) and to the plane of the valve member (32), whereby when the valve member (32) moves from its open position to its closed position by the action of air on it as aforesaid, no other part of the valve member (32) meets any other obstruction to its free movement, before the edge portion (36) of the valve member (32) abuts the valve seat (37) as aforesaid.

## Patentansprüche

1. Werkzeug zum Setzen von Befestigungsmitteln mit Abreißdorn, wobei das Werkzeug folgende Bestandteile aufweist:
Zieheinrichtungen zum ziehen des Dorns (23) eines Befestigungsmittels (21);
eine pneumatische betätigte Kolbenzylindereinrichtung (13) zum Aufbringen von Kraft auf die Zieheinrichtung, um dadurch den Dorn (23) eines Befestigungsmittels zu ziehen;
ein Dämpfungsventil (27) zum Dämpfen der Luftströmung von der Kolbenzylindereinrichtung (13), wenn beim Abreißen des Dorns (23) eines Befestigungsmittels die Kraft plötzlich freigesetzt wird, um dadurch den mechanischen Schock auf das Werkzeug zu verringern, wenn der Dorn (23) des Befestigungsmittels abreißt, wobei das Dämpfungsventil (27) in die geöffnete Stellung federvorgespannt ist und gegen die Federvorspannung in Richtung der geschlossenen Stellung durch die Wirkung der Luft auf das Ventil (27) bewegt wird, wenn ein Dorn (23) eines Befestigungsmittels in der vorerwähnten Weise abreißt;
das Dämpfungsventil (27) enthält einen Ventilsitz (37) und einen Ventilteil (32), welcher federnd ist und aufgrund seiner eigenen Federung in Richtung der geöffneten Stellung federvorgespannt ist;
mindestens ein Kantenbereich (36) des federnden Ventilteiles (32) ist derart angeordnet, daß er sich dem Ventilsitz (37) nähert und in Eingriff mit diesem gelangt, wenn der Ventilteil (32) in die geschlossene Position bewegt wird;
das Ventil (27) enthält ferner Sicherungs- oder Befestigungseinrichtungen (34) zum Befestigen des federnden Ventilteils (32) an einer Befestigungsposition (33), welche längs des Ventilteils (32) im Abstand von dem Kantenbereich (36) des Ventilteils (32) liegt;
dadurch gekennzeichnet, daß die Sicherungs- oder Befestigungsposition (33) ferner von dem Ventilsitz (37) längs einer Richtung senkrecht zum Ventilsitz (37) und zu der Ebene des Ventilteils (32) verschoben ist.

2. Werkzeug nach Anspruch 1, dadurch gekennzeichnet, daß der Ventilteil (32) in Form einer kreisförmigen Scheibe mit einem um den Umfang führenden Kantenbereich (36) der oben erwähnten Art ausgebildet ist, und daß die Befestigungsposition (33) in der Mitte der Scheibe vorgesehen ist.

3. Werkzeug nach Anspruch 1 oder 2, dadurch gekennzeichnet, daß der Ventilteil (32) in Form einer im wesentlichen flachen federnden Scheibe ausgebildet ist, welche in der vorerwähnten Weise in Richtung einer im wesentlichen flachen Gestalt im geöffneten Zustand vorgespannt ist und welche in eine gewölbte Form im geschlossenen Zustand bewegt wird.

4. Werkzeug nach einem der vorstehenden Ansprüche 1 bis 3, dadurch gekennzeichnet, daß der Ventilsitz (37) im wesentlichen parallel zu dem zur Anlage gelangenden Kantenbereich (36) des federnden Ventilteils (32) liegt, wenn dieser sich ihm nähert und mit ihm in Eingriff gelangt.

5. Werkzeug nach Anspruch 1, dadurch gekennzeichnet, daß der Ventilteil (32) in seiner Befestigungsposition (33) von dem gegenüberliegenden Teil der Oberfläche (31), die durch-gehend mit dem Ventilsitz (37) ausgebildet ist, in einer Richtung senkrecht zum Ventilsitz (37) und zur Ebene des Ventilteils (32) verschoben ist, wodurch, wenn der Ventilteil (32) sich aus seiner geöffneten Stellung in seine geschlossene Stellung durch Wirkung der Luft in der oben erwähnten Weise bewegt, kein anderer Teil des Ventilteils (32) irgendein anderes Hindernis gegen seine freie Bewegung trifft, ehe der Kantenabschnitt (36) des Ventilteils (32) in dedr vorerwähnten Weise an dem Ventilsitz (37) anliegt.

## Revendications

1. Outil de pose de rivets borgnes, qui comprend: un moyen de traction pour tirer la tige (23) d'un rivet (21);
un vérin (13) à actionnement pneumatique pour appliquer une force au moyen de traction, de façon à tirer la tige (23) du rivet;
une valve d'amortissement (27) pour amortir l'écoulement d'air venant du vérin (13) lorsque la force est soudainement libérée lors de la rupture d'une tige (23) de rivet, afin de réduire ainsi le choc mécanique sur l'outil lorsqu'une tige (23) de rivet est rompue; la valve d'amortissement (27) étant sollicitée élastiquement vers la position ouverte mais étant déplacée, en opposition à la sollicitation, vers la position fermée par l'action de l'air sur la valve (27) lorsqu'une tige (23) de rivet est rompue comme mentionné ci-dessus;
la valve d'amortissement (27) comprenant un siège de valve (37) et un élément de valve (32) qui est élastique et est sollicité vers sa position ouverte par sa propre élasticité; au moins une partie de bord (36) de l'élément de valve élastique (32) étant agencée de façon à s'approcher du siège de valve (37) et à venir ensuite en butée sur lui lorsque l'élément de valve (32) se déplace vers sa position fermée; la valve (27) comprenant aussi un moyen de fixation (34) pour fixer l'élément de valve élastique (32) en un point de fixation (33) situé sur cet élément (32) et dans une direction prise le long de cet élément, à distance de ladite partie de bord (36) de l'élément de valve (32) ;
caractérisé en ce que le point de fixation (33) est aussi écarté du siège de valve (37) dans une direction perpendiculaire à ce siège (37) et au plan de l'élément de valve (32).

2. Outil selon la revendication 1, dans lequel l'élément de valve (32) est en forme de disque circulaire comprenant une partie de bord (36) périphérique comme mentionné ci-dessus et présentant le point de fixation (33) au centre du disque.

3. Outil selon la revendication 1 ou la revendication 2, dans lequel l'élément de valve (32) est en forme de disque élastique sensiblement plan, qui est sollicité comme mentionné ci-dessus vers une configuration sensiblement plane dans la position d'ouverture et est déplacé vers une configuration incurvée dans la position de fermeture.

4. Outil selon l'une quelconque des revendications 1 à 3, dans lequel le siège de valve (37) est sensiblement parallèle à la partie de bord (36), qui vient en butée, de l'élément élastique de valve (32), quand ce dernier s'est rapproché dudit siège et est en butée contre lui.

5. Outil selon la revendication 1, dans lequel l'élément de valve (32) est décalé, à l'endroit de son point de fixation (33), par rapport à la partie adjacente à la surface (31) contiguë du siège de valve (37), selon une direction perpendiculaire au siège de valve (37) et au plan de l'élément de valve (32), grâce à quoi, lorsque l'élément de valve (32) se déplace depuis sa position d'ouverture vers sa position de fermeture sous l'effet de l'air qui y agit comme mentionné ci-dessus, aucune autre partie de l'élément de valve (32) ne rencontre une autre obstruction à son déplacement libre, avant que la partie de bord (36) de l'élément de valve (32) ne vienne en butée contre le siège de valve (37) comme mentionné ci-dessus.
